Europäisches Patentamt

European Patent Office

Office européen des brevets

(11) Veröffentlichungsnummer: **0 286 902 B1**

(12) **EUROPÄISCHE PATENTSCHRIFT**

(45) Veröffentlichungstag der Patentschrift: **27.05.92**

(51) Int. Cl.5: **A41H 43/00**, A41H 3/00

(21) Anmeldenummer: **88104992.8**

(22) Anmeldetag: **28.03.88**

(54) Verfahren zur Minimierung des Materialverbrauchs beim Auslegen einer Materialbahn.

(30) Priorität: **16.04.87 DE 3713010**

(43) Veröffentlichungstag der Anmeldung:
**19.10.88 Patentblatt 88/42**

(45) Bekanntmachung des Hinweises auf die
Patenterteilung:
**27.05.92 Patentblatt 92/22**

(84) Benannte Vertragsstaaten:
**CH DE ES FR GB IT LI**

(56) Entgegenhaltungen:
**DE-A- 3 401 826**
**DE-A- 3 417 564**
**GB-A- 2 143 423**

(73) Patentinhaber: **Krauss u. Reichert GmbH +
Co. KG Spezialmaschinenfabrik
Stuttgarter Strasse 68
W-7012 Fellbach(DE)**

(72) Erfinder: **Jung, Rolf
Im Sämann 14
W-7050 Waiblingen(DE)**
Erfinder: **Buss, Albert
Buchrainstrasse 4
W-7420 Münsingen(DE)**
Erfinder: **Buchmann, Winfried
Ludwig-Speidel-Strasse 65
W-7254 Hemmingen(DE)**

(74) Vertreter: **Hoeger, Stellrecht & Partner
Uhlandstrasse 14 c
W-7000 Stuttgart 1(DE)**

## Beschreibung

Die Erfindung betrifft ein Verfahren zur Minimierung des Materialverbrauchs beim Auslegen einer mit einem Fehler behafteten Materialbahn, insbesondere einer Stoffbahn, bei welchem das Auslegen dann, wenn der Fehler in mindestens einem Zuschnitteil eines Schnittmusters zu liegen kommt, an einer quer zur Legerichtung über die ganze Breite der Materialbahn verlaufenden Stoplinie unterbrochen, von dieser entgegengesetzt zur Legerichtung zu einer zur Stoplinie parallelen Neuanlegelinie zurückgefahren und von dieser aus wieder weitergelegt wird, wobei die Neuanlegelinie vor einem Anfang eines jeden der fehlerbehafteten Zuschnitteile angeordnet wird.

Es ist bereits ein Legeverfahren bekannt, bei welchem ermittelt wird, ob der Fehler in einem Zuschnitteil oder neben dem Zuschnitteil im Abfall zu liegen kommt, s.z.B. DE-A-3 401 826. Wenn der Fehler im Zuschnitteil liegt, wird das Auslegen an der Stoplinie unterbrochen. Dabei wird die Stoplinie entweder so gelegt, daß sie an einem Fehlerende liegt, so daß der Fehler noch in der ausgelegten Lage vorhanden ist, oder so, daß sie an einem Fehleranfang liegt, so daß der Fehler noch in der neu anzulegenden Materialbahn enthalten ist. Im letzteren Fall wird in der Regel das fehlerhafte Stück herausgeschnitten. Anschließend wird zu einer Überlappungsstelle zurückgefahren.

Bei den bisher bekannten Verfahren ist es üblich, in einem Schnittbild definierte Überlappungsstellen zu haben, die durch den Aufbau des Schnittbildes festgelegt sind, und zwar dadurch, daß sich an diesen definierten Überlappungsstellen ein schmaler Abfallstreifen quer über das gesamte Schnittbild erstreckt, so daß - in Legerichtung gesehen - vor dieser Überlappungsstelle sämtliche Zuschnitteile des Schnittmusters enden und nach dieser Überlappungsstelle wieder eine neue Anordnung von Zuschnitteilen beginnt.

Durch dieses Zurückfahren an die im Schnittbild festgelegten Überlappungsstellen wird das jeweilige fehlerbehaftete Zuschnitteil überlappend gelegt und ist somit beim späteren Zuschneiden vollständig vorhanden, es wird aber vermieden, daß ein seitlich des fehlerbehafteten Zuschnitteils liegendes, an sich fehlerfreies Zuschnitteil beim Abschneiden der Stoffbahn an der Stoplinie beschädigt und beim Überlappendlegen nicht vollständig neu ausgelegt wird, so daß dann später beim Zuschneiden dieses an sich fehlerfreie Zuschnitteil nicht vollständig vorhanden ist.

Die mit durch das Schnittbild festgelegten Überlappungsstellen arbeitenden Verfahren haben den Nachteil, daß das Schnittbild nicht immer optimal gestaltet werden kann, da stets darauf Rücksicht genommen werden muß, daß eine angemessene Zahl von Überlappungsstellen im Schnittbild vorkommt. Andererseits muß, wenn beispielsweise ein Fehler lediglich in einem kleinen Teil auftaucht, oft ein grosses Stück bis zur nächsten Überlappungsstelle zurückgefahren werden, so daß ein unnötiger Materialverbrauch entsteht.

Neben diesen mit durch das Schnittbild festgelegten Überlappungsstellen arbeitenden Verfahren sind auch Verfahren bekannt, bei denen die Neuanlegelinie irgendwo - in Legerichtung gesehen - vor dem Anfang des fehlerbehafteten Teils angeordnet wird. Bei diesen Verfahren sind jedoch keine strengen und in allen Fällen anzuwendende Kriterien bekannt, die jeweils die Ermittlung einer optimalen Lage der Stoplinie und der Neuanlegelinie erlauben, sondern bei diesen Verfahren wird die Anordnung der Stoplinie und der Neuanlegelinie dem Gutdünken einer Bedienungsperson überlassen, die in jedem Fall frei nach ihrem eigenen Ermessen entscheidet.

Bei diesen Verfahren ist nachteilig, daß die Stoffersparnis der Erfahrung und Geschicklichkeit der Bedienungsperson überlassen bleibt und daß nicht ausgeschlossen werden kann, daß die Bedienungsperson beim Abschneiden der Materialbahn an der Stoplinie Zuschnitteile beschädigt, dies nicht sofort erkennt und dann diese Zuschnitteile zusammen mit dem fehlerbehafteten Zuschnitteil nicht mehr vollständig neu auslegt, so daß diese Zuschnitteile dann später fehlen. Außerdem hat dieses Verfahren den Nachteil, daß diese Bedienungsperson wegen des Fehlens eines fest einzuübenden Schemas teilweise sehr viel Zeit für eine Festlegung einer Stop- und einer Neuanlegelinie benötigt. Schließlich kann dieses Verfahren wegen der fehlenden Schematisierung auch nicht automatisch, sei es durch eine gut trainierte Person, sei es durch eine entsprechend gesteuerte Maschine, durchgeführt werden.

Der Erfindung liegt daher die Aufgabe zugrunde, ein Verfahren der gattungsgemäßen Art derart zu verbessern, daß dieses bei seiner Befolgung stets eine material- oder stoffsparende Vorgehensweise erlaubt.

Diese Aufgabe wird bei einem Verfahren der eingangs beschriebenen Art erfindungsgemäß dadurch gelöst, daß ausgehend von einem durch den Fehler bestimmten Bereich ein Satz von mindestens zwei virtuellen Stoplinien in das Schnittbild gelegt wird und alle von den virtuellen Stoplinien geschnittenen fehlerfreien Zuschnitteile ermittelt werden, daß durch Anwendung eines die von den virtuellen Stoplinien geschnittenen fehlerfreien und die fehlerbehafteten Zuschnitteile berücksichtigenden Optimierungskriteriums eine der virtuellen Stoplinien ausgewählt und an dieser die Stoplinie angeordnet wird, daß eine maximale Distanz von der Stoplinie ermittelt wird, welche dem Abstand eines am weitesten von der Stoplinie entfernt liegenden Anfangs eines der von der Stoplinie geschnittenen fehlerfreien Zuschnitteile oder eines der fehlerbehafteten Zuschnitteile entspricht, und daß die Neuanlegelinie entgegengesetzt zur Legerichtung mindestens in der maximalen Distanz von der Stoplinie angeordnet wird.

Dieses erfindungsgemäße Verfahren hat den Vorteil, daß durch das feststehende Optimierungskriterium stets die Möglichkeit besteht, in gleicher Weise vorzugehen und dabei von dem Satz virtueller Stoplinien die geeignetste auszuwählen. Außerdem hat dieses Verfahren den Vorteil, daß bei einer einmal gewählten Stoplinie - unabhängig davon, wo diese Stoplinie liegt - stets sichergestellt ist, daß die Neuanlegelinie gegenüber der Stoplinie so weit entgegengesetzt zur Legerichtung zurückgesetzt wird, daß keines der an sich fehlerfreien Zuschnitteile durch die Stoplinie beschädigt und beim Überlappendlegen nicht mehr vollständig ausgelegt wird, so daß sogar unabhängig von der Optimierung der Lage der Stoplinie garantiert ist, daß in jeder ausgelegten Lage, gegebenenfalls mit einem überlappend gelegten Stück, sämtliche Zuschnitteile vollständig vorhanden sind.

Dieses erfindungsgemäße Verfahren geht davon aus, daß die Materialbahn oder Stoffbahn beispielsweise durch eine Legemaschine ausgelegt wird, die nur in der Lage ist, senkrecht zu einer Legerichtung angeordnete Stoplinien und Neuanlegelinien anzufahren, so daß sowohl die Stoplinien als auch die Neuanlegelinien sich ungefähr senkrecht zur Legerichtung quer über die gesamte Breite der Materialbahn erstrecken und folglich auch bei einem Abschneiden nahe der Stoplinie stets die Materialbahn über ihre ganze Breite durchtrennt wird.

Der Satz virtueller Stoplinien kann für das erfindungsgemäße Verfahren beliebig gewählt werden. Da jedoch jede virtuelle Stoplinie an Hand des Optimierungskriteriums geprüft werden muß, sollte die Zahl der virtuellen Stoplinien nicht unendlich groß sein. So wäre es beispielsweise denkbar, die virtuellen Stoplinien über eine gewisse Strecke in Legerichtung und entgegengesetzt dazu in konstanten Abständen voneinander anzuordnen und mit dem Optimierungskriterium zu überprüfen. Da jedoch davon ausgegangen werden kann, daß die Materialbahn in der Regel bis zum Auftreten des Fehlers ausgelegt werden sollte, ist eine vorteilhafte Reduzierung der virtuellen Stoplinien dadurch möglich, daß der Satz virtueller Stoplinien so positioniert ist, daß eine erste im Bereich des Fehlers und weitere in Legerichtung im Abstand von dieser liegen.

Somit wäre es beispielsweise denkbar, ausgehend von einem Bereich des Fehlers, in Legerichtung Stoplinien in vorgegebenen Abständen anzuordnen. Dies könnte dann zu zufriedenstellenden Ergebnissen führen, wenn das Schnittbild nur wenige unterschiedliche Zuschnitteile aufweist, die sich in kurzen Abständen wiederholen, so daß die Abstände der virtuellen Stoplinien entsprechend einer Größe und einem Wiederholungsabstand der Zuschnitteile fest vorgegeben werden könnten. Weit vorteilhafter und vor allem universell ohne Rücksicht auf das zugrundeliegende Schnittmuster einsetzbar ist das erfindungsgemäße Verfahren jedoch dann, wenn zur Positionierung der virtuellen Stoplinien im Bereich des Fehlers eine Ausgangslinie angeordnet wird, wenn die von der Ausgangslinie geschnittenen fehlerfreien Zuschnitteile ermittelt werden und wenn die weiteren virtuellen Stoplinien jeweils an einem Ende eines dieser Zuschnitteile angeordnet werden. Dieses besonders bevorzugte Ausführungsbeispiel des erfindungsgemäßen Verfahrens minimiert die Zahl der in dem Satz vorzusehenden virtuellen Stoplinien dadurch, daß es in Anpassung an das jeweilige Schnittmusterbild virtuelle Stoplinien lediglich an den Stellen anordnet, an welchen überhaupt Aussicht besteht, eine Minimierung des Materialverbrauchs zu erreichen. Bei diesem Ausführungsbeispiel werden also, ausgehend von einer ersten virtuellen Stoplinie im Bereich des Fehlers, in Legerichtung fortschreitend an all den Enden der von der Ausgangslinie geschnittenen fehlerfreien Zuschnitteile weitere virtuelle Stoplinien gelegt, so daß nachher an Hand des Optimierungskriteriums geprüft werden kann, ob es stoffsparender ist, eines oder auch mehrere der an sich fehlerfreien Zuschnitteile voll auszulegen und erst hinter diesen ausgelegten Zuschnitteilen die Stoplinie anzuordnen und von dieser dann entsprechend den vorstehend beschriebenen Ausführungsbeispielen die Neuanlegelinie zu ermitteln.

Wenn vorgesehen wird - wie es bei einer verbesserten Version des vorstehend beschriebenen Ausführungsbeispiels der Fall ist -, daß die weiteren virtuellen Stoplinien in Legerichtung in einem kleinen Abstand von den Enden der Zuschnitteile angeordnet werden, so hat dies zwar einen geringfügig größeren Materialverbrauch zur Folge, jedoch wird dieser Nachteil durch den Vorteil aufgewogen, daß sichergestellt ist, daß die jeweiligen Zuschnitteile an ihren Rändern nicht beispielsweise durch Abschneiden an der Stoplinie, beschädigt werden. Dies ist insbesondere dann wichtig, wenn beim Auslegen in Legerichtung im Laufe der Zeit ein gewisser Meßfehler auftritt.

Eine besonders einfache Version des vorstehend beschriebenen erfindungsgemäßen Ausführungsbeispiels sieht vor, daß die erste virtuelle Stoplinie und die Ausgangslinie zusammengelegt werden. Damit wird der Aufwand bei der Festlegung der virtuellen Stoplinien geringer. Andererseits kann es bei komplizierteren Schnittmustern vorteilhafter sein, die Ausgangslinie und die erste virtuelle Stoplinie getrennt voneinander anzuordnen.

Hinsichtlich der relativen Lage der Ausgangslinie und der ersten virtuellen Stoplinie ist es vorteilhaft, wenn die erste virtuelle Stoplinie - in Legerichtung gesehen - auf die Ausgangslinie folgt.

Bei den bisher beschriebenen Ausführungsbeispielen wurde nicht genau festgelegt, wie die erste virtuelle Stoplinie relativ zu dem Fehler angeordnet sein soll. Es wurde lediglich ausgesagt, daß diese im Bereich eines Fehlers anzuordnen ist. Bei einer besonders stoffsparenden Variante des erfindungsgemäßen Verfahrens ist daher vorgesehen, daß die erste virtuelle Stoplinie nach einem Auswahlkriterium entweder nahe an ein Fehlerende oder nahe an das dem Fehlerende nächstliegende Ende eines fehlerbehafteten Teils gelegt wird. Das heißt, es sind im Bereich des Fehlers zwei Orte vorgesehen, welche eine besonders günstige Lage der ersten virtuellen Stoplinie darstellen.

Durch diese besonders vorteilhafte Version sollen jedoch auch einfachere Vorgehensweisen entsprechend dem erfindungsgemäßen Verfahren nicht ausgeschlossen sein, bei denen die erste virtuelle Stoplinie stets nahe an dem Fehlerende angeordnet wird.

Günstigerweise wird bei der vorstehend genannten Festlegung der virtuellen Stoplinie an einem der genannten Orte so vorgegangen, daß das Auswahlkriterium für das Fehlerende dann erfüllt ist, wenn dieses in einem Zuschnitteil liegt. Das heißt also, daß immer dann, wenn das Fehlerende in einem Zuschnitteil liegt, die erste virtuelle Stcplinie auch nahe diesem Fehlerende angeordnet wird. In allen anderen Fällen, insbesondere in den Fällen, in denen das Fehlerende im Abfall, also außerhalb eines Zuschnitteils liegt, wird dann die erste virtuelle Stoplinie nahe an dem Ende des nächstliegenden fehlerbehafteten Teils angeordnet.

Auch bei der Anordnung der ersten virtuellen Stoplinie hat es sich als zweckmäßig erwiesen, wenn die erste virtuelle Stoplinie in Legerichtung in einem kleinen Abstand von dem Fehlerende angeordnet wird.

Bei den bisher beschriebenen Ausführungsformen des erfindungsgemäßen Verfahrens wurden lediglich besonders bevorzugte und zweckmäßige Ausführungsformen erläutert, welche die Anordnung der virtuellen Stoplinien näher charakterisieren. Es wurden bisher bezüglich des Optimierungskriteriums noch keine weiteren Angaben gemacht. Dieses Optimierungskriterium kann grundsätzlich an einer Vielzahl von Größen orientiert sein. So ist es beispielsweise denkbar, bei gemusterten Stoffen beim Optimierungskriterium auf die relative Lage des Musters der auszulegenden Stoffbahn bezüglich der einzelnen Zuschnitteile abzustellen, wenn es erforderlich ist, daß die jeweiligen Zuschnitteile an einer ganz bestimmten Stelle des Musters bei der auszulegenden Stoffbahn beginnen. Ohne ein derartiges Optimierungskriterium auszuschließen, ist es für die meiste Zahl der Anwendungsfälle zweckmäßig, wenn in das Optimierungskriterium die Erstreckung der von der jeweiligen virtuellen Stoplinie geschnittenen fehlerfreien und der fehlerbehafteten Zuschnitteile entgegengesetzt zur Legerichtung eingeht. Dieses Kriterium ist zumindest bei einfarbigen und kleingemusterten Stoffen dann, wenn man möglichst stoffsparend auslegen will, vorrangiger als eine Ausrichtung des Optimierungskriteriums an dem Stoffmuster. Ergänzend dazu ist jedoch das letztgenannte Optimierungskriterium bei gemusterten Stoffen eine weitere zweckmäßige und sinnvolle Ergänzung.

Besonders vorteilhaft hat sich ein Ausführungsbeispiel des erfindungsgemäßen Verfahrens erwiesen, bei welchem in das Optimierungskriterium die maximale Distanz zwischen dem Satz virtueller Stoplinien und den zu diesen zugehörigen virtuellen Neuanlegelinien eingehen, wobei die maximalen Distanzen wie bei tatsächlichen Stoplinien ermittelt werden. Das heißt also, daß sich das Optimierungskriterium bei diesem bevorzugten Ausführungsbeispiel stets danach richtet, wie die maximale Distanz, ausgehend von jeder virtuellen Stoplinie, zu bemessen ist.

Damit sind jedoch nicht alle Möglichkeiten ausgeschöpft, die sich bezüglich einer Festlegung des Optimierungskriteriums bieten. So kann die Materialersparnis weiter dadurch minimiert werden, daß in das Optimierungskriterium eine Ausdehnung des Fehlers zwischen einem Fehleranfang und einem Fehlerende eingeht, denn es gibt Situationen, in denen ein Weiterauslegen einer fehlerbehafteten Materialbahn unschädlich ist, da der Fehler beispielsweise im Abfall zu liegen kommt. Dies kann in manchen Situationen zu einer zusätzlichen Materialersparnis führen.

Eine Möglichkeit, die Ausdehnung des Fehlers zu berücksichtigen, sieht vor, daß eine Erstreckung des Fehlers in Legerichtung von der jeweiligen virtuellen Stoplinie bis zum Fehlerende ermittelt und zu der jeweiligen maximalen Distanz dieser virtuellen Stoplinie als Zuschlag addiert wird. Damit wird in all den Ausführungsformen des erfindungsgemäßen Verfahrens, bei denen die Möglichkeit besteht, die erste virtuelle Stoplinie und auch gegebenenfalls weitere virtuelle Stoplinien vor dem Fehlerende anzuordnen, vermieden, daß bei Auswahl einer dieser virtuellen, vor dem Fehlerende liegenden Stoplinien die Materialbahn an der ausgewählten Stoplinie abgeschnitten und an der Neuanlegelinie angelegt wird, wobei sich in dieser neu angelegten Materialbahn noch ein Rest des Fehlers befindet, der nun wieder in ein Zuschnitteil hineingelegt wird.

Das Addieren eines Zuschlags zu der maximalen Distanz berücksichtigt jedoch nicht all die Fälle, bei denen es unschädlich ist, wenn in der neu angelegten Materialbahn noch ein Stück des Fehlers vorhanden ist, da dieses nach dem Neuanlegen in dem Abfall zu liegen kommt. Aus diesem Grund sieht eine weitere Verfeinerung des erfindungsgemäßen Verfahrens vor, daß von dem Zuschlag die Differenz zwischen der maximalen Distanz und dem größten Abstand des Anfangs eines der fehlerbehafteten Zuschnitteile wieder abgezogen und der Zuschlag dann, wenn er größer als Null ist, zu der maximalen Distanz addiert wird. Somit ist eine weitere, diesen besonderen Situationen angepaßte Stoffersparnis möglich.

Unter Berücksichtigung einiger oder sämtlicher der vorstehend beschriebenen, in das Optimierungskriterium eingehenden Größen sieht die einfachste Möglichkeit eines Auswahlverfahrens zur Bestimmung der virtuellen Stoplinie, mit welcher die tatsächliche Stoplinie identisch sein soll, vor, daß zu allen virtuellen Stoplinien die maximale Distanz, gegebenenfalls unter zusätzlicher Berücksichtigung des Zuschlags ermittelt wird und daß das Optimierungskriterium für die virtuelle Stoplinie erfüllt ist, deren zugehörige Neuanlegelinie die kleinste maximale Distanz aufweist.

Bei den bisher beschriebenen Ausführungsbeispielen des erfindungsgemäßen Verfahrens ist vorgesehen, daß die Materialbahn vor einem Anlegen an der Neuanlegelinie, insbesondere bei der Stoplinie, abgeschnitten wird. Diese Vorgehensweise stellt jedoch nur eine von mehreren Möglichkeiten dar. Beispielsweise ist es ebenfalls möglich, daß die Materialbahn zwischen der Stop- und der Neuanlegelinie entgegengesetzt zur Legerichtung in Form einer Falte gelegt wird. Bei dieser Vorgehensweise könnte auf den ersten Blick vermutet werden, daß ein größerer Materialverbrauch die Folge ist. Dies muß jedoch nicht zwangsläufig so sein, denn beispielsweise ist es denkbar, daß die Falte so gelegt Wird, daß sich in dieser der Fehler befindet. Um einen solchen Fall in das Optimierungskriterium miteinzubeziehen, ist es selbstverständlich notwendig, daß die erste virtuelle Stoplinie in den Bereich eines Fehleranfangs gelegt wird, so daß beim Abprüfen des Optimierungskriteriums auch ein Auslegen in Form einer Falte mitberücksichtigt werden kann. Des weiteren liegt es ebenfalls im Rahmen des erfindungsgemäßen Verfahrens, ein Abschneiden der Materialbahn an der Stoplinie oder auch ein Auslegen einer Falte zwischen der Stop- und der Neuanlegelinie alternativ zueinander vorzusehen und zwischen diesen beiden Alternativen mittels des Optimierungskriteriums zu entscheiden, in welche die Erstreckung des Fehlers in Legerichtung miteinbezogen werden kann. Der Vorteil des Faltenlegens kann darin gesehen werden, daß sich ein zumindest zeitraubendes Abschneiden der Materialbahn an der Stoplinie erübrigt.

Das vorstehend beschriebene erfindungsgemäße Verfahren läßt sich weiter dadurch optimieren, daß das Schnittbild zusätzlich zur Form der Zuschnitteile Informationen über die von Fehlern freizuhaltenden Bereiche der Zuschnitteile umfaßt und daß nur dann, wenn der Fehler in diesem Bereich der Zuschnitteile zu liegen kommt, das Auslegen unterbrochen, zur Neuanlegelinie zurückgefahren und von dieser aus weitergelegt wird. Diese zusätzlichen Verfahrensschritte geben die Möglichkeit, zum Beispiel dann das Auslegen nicht zu unterbrechen, wenn der Fehler im Bereich eines Nahtzuschlags eines Zuschnitteils oder eines eine Unterseite eines Kragens bildenden Zuschnitteils zu liegen kommt, da der Fehler, wenn es sich beispielsweise um einen Flecken oder einen Webfehler handelt, in diesen Bereichen überhaupt nicht stört. Selbst wenn es sich bei dem Fehler um einen Riß oder ein Loch handelt, ist dieser zumindest noch in einem Teil des Nahtzuschlags tolerierbar, so daß in all diesen Fällen das Legeverfahren fortgesetzt werden kann.

Die von Fehlern freizuhaltenden Bereiche können nun durch unterschiedlichste Kriterien definiert werden. Beispielsweise ist es möglich, in diesen Kriterien die Stelle, in welcher dieser Bereich des Zuschnitteils beim fertigen Kleidungsstück zu liegen kommt, zu berücksichtigen. Das einfachste Kriterium einer Festlegung der von Fehlern freizuhaltenden Bereiche geht davon aus, daß die von Fehlern freizuhaltenden Bereiche der Zuschnitteile die bei einem aus diesen Zuschnitteilen gefertigten Kleidungsstück normalerweise sichtbaren Bereiche der Zuschnitteile sind.

Eine weitere Verbesserung und Optimierung des erfindungsgemäßen Verfahrens ist dann möglich, wenn für jeden Fehler zusätzliche Daten erfaßt werden, durch welche der Fehler in zusätzliche Kategorien eingeteilt wird und wenn nur dann, wenn ein Fehler einer vorbestimmten Kategorie in einem vorbestimmten Bereich eines der Zuschnitteile fällt, das Auslegen unterbrochen, zur Neuanlegelinie zurückgefahren und von dieser aus weitergelegt wird. Die Einteilung der Fehler in unterschiedliche Kategorien ermöglicht es zum Beispiel, solche Fehler, die Löcher oder Risse sind, anders zu behandeln als beispielsweise Webfehler oder Flecken. Letztere können zum Beispiel bedenkenlos in all den im fertigen Kleidungsstück nicht sichtbaren Stellen toleriert werden, während ein Loch oder ein Riß beispielsweise an einer Kragenunterseite nicht tolerierbar ist, während ein Loch oder ein Riß zumindest in einem Teilbereich eines Nahtzuschlags toleriert werden könnte. Es besteht somit die Möglichkeit, die Zuschnitteile in unterschiedliche Bereiche aufzuteilen, die in Verbindung mit jeweils vorbestimmbaren Fehlerkategorien dazu führen, daß das Auslegen unterbrochen wird, während dann, wenn ein Fehler einer nicht kritischen anderen Kategorie in einen derartigen Bereich eines Zuschnitteils fällt, weitergelegt werden kann.

Schließlich läßt sich das erfindungsgemäße Verfahren noch zusätzlich dadurch verfeinern, daß das Schnittbild zusätzlich zur Form der Zuschnitteile Daten über die weitere Bearbeitung eines aus den Zuschnitteilen herzustellenden Kleidungsstücks nach dem Nähen desselben umfaßt und daß aufgrund dieser Daten festgelegt ist, bei welcher Fehlerkategorie das Auslegen unterbrochen, zur Neuanlegelinie zurückgefahren und von dieser aus weitergelegt wird. Damit lassen sich z. B. Fehler erfassen, bei denen es sich um Öl- oder Schmutzflecken handelt, die bei einer weiteren Bearbeitung des fertigen Kleidungsstücks, beispielsweise durch Färben, Schrumpfen, Aufrauhen usw. ohne Bedeutung sind, während Löcher oder Risse oder auch Webfehler auch noch nach derartigen weiteren Bearbeitungsschritten sichtbar bleiben.

Darüber hinaus betrifft die vorliegende Erfindung eine automatische Steuerung für eine Stofflegemaschine, die so aufgebaut und vorbereitet ist, daß sie das Verfahren nach einem oder mehreren der vorstehend beschriebenen Ausführungsbeispiele entsprechend den Ansprüchen steuert oder durchführt.

Weitere Merkmale und Vorteile des erfindungsgemäßen Verfahrens sind Gegenstand der nachfolgenden Beschreibung sowie der zeichnerischen Darstellungen einiger Ausführungsbeispiele. In der Zeichnung zeigen:

Fig. 1 ein Flußdiagramm eines Ausführungsbeispiels des erfindungsgemäßen Verfahrens;

Fig. 2 ein typisches Schnittmusterbild mit einer ersten Fehlersituation:

Fig. 3 ein typisches Schnittmusterbild mit einer zweiten Fehlersituation;

Fig. 4 ein typisches Schnittmusterbild mit einer dritten Fehlersituation und

Fig. 5 ein Schnittmusterbild mit einer der Fig. 4 ähnlichen Fehlersituation.

Ein bevorzugtes Ausführungsbeispiel eines erfindungsgemäßen Verfahrens geht aus von einer Situation, in welcher eine Legemaschine beim Auslegen einer Stoffbahn auf einem Legetisch festgestellt hat, daß die ausgelegte Stoffbahn in einem bereits ausgelegten Stück oder in einem auszulegenden Stück einen Fehler aufweist.

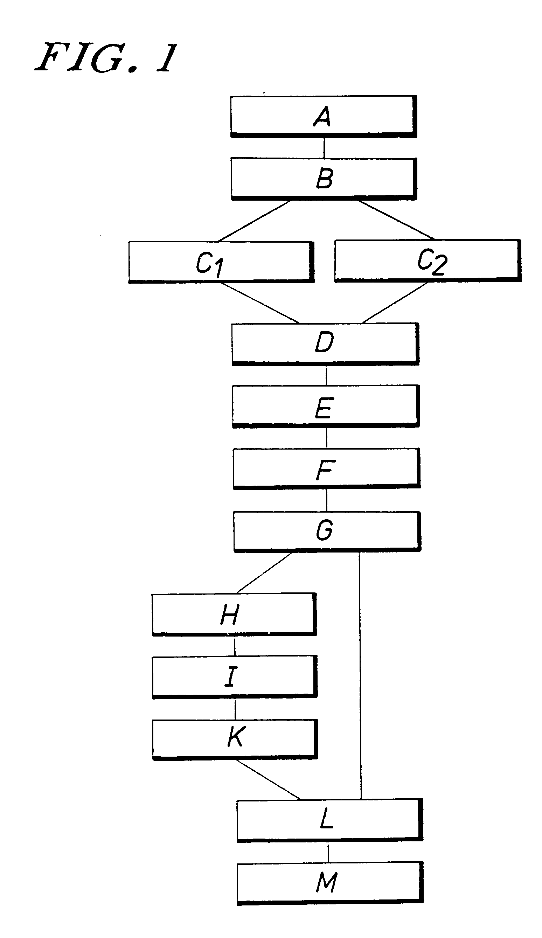

Im folgenden wird nun die Vorgehensweise an Hand des Flußdiagramms in Fig. 1 erläutert.

Im Schnitt A wird entsprechend dem erfindungsgemäßen Verfahren die Lage des Fehlers durch Bestimmung eines Fehleranfangs und eines Fehlerendes, d.h. die Erstreckung des Fehlers in Auslege- oder X-Richtung ermittelt. Außerdem wird die Lage des Fehlers quer zur Auslege- oder X-Richtung, d.h. also in Y-Richtung ermittelt. An Hand dieser X- und Y-Koordinaten des Fehleranfangs und des Fehlerendes erfolgt ein Vergleich mit einem abgespeicherten oder auf einer anderen Vorrichtung ablesbaren Schnittmusterbild. Wenn festgestellt wird, daß sowohl der Fehleranfang als auch das Fehlerende mit ihren X- und Y-Koordinaten im Abfall, d.h. also zwischen mehreren Zuschnitteilen liegen, so wird sofort weiter gelegt, d.h. das erfindungsgemäße Verfahren wird nicht durchgeführt.

Wird erkannt, daß der Fehler zumindest mit dem Fehleranfang oder dem Fehlerende oder auch sowohl mit dem Fehleranfang als auch mit dem Fehlerende in einem der Zuschnitteile oder in mehreren Zuschnitteilen liegt, so werden diese fehlerbehafteten Zuschnitteile entsprechend dem erfindungsgemäßen Verfahren ermittelt.

Im nachfolgenden Schritt B wird nochmals nachgeprüft, ob das Fehlerende in einem Zuschnitteil oder im Abfall liegt. Liegt das Fehlerende im Abfall, dann wird Schritt C 1 durchgeführt, gemäß welchem eine Ausgangslinie ungefähr am Ende eines dem Fehlerende entgegengesetzt zur Legerichtung am nächsten liegenden fehlerbehafteten Zuschnitteils angeordnet wird. Liegt jedoch das Fehlerende in einem Zuschnitteil, dann erfolgt, ausgehend vom Schritt B ein Übergang zum Schritt C 2, gemäß welchem die Ausgangslinie an das Fehlerende gelegt wird.

Diese Ausgangslinie bildet die Basis für das nachfolgende erfindungsgemäße Verfahren. Gemäß diesem wird in Schritt D festgestellt, welche Zuschnitteile von der Ausgangslinie geschnitten werden, d.h. also, welche Zuschnitteile beiderseits des Fehlers auf derselben Höhe wie dieser in der Stoffbahn liegen. Anschließend werden in geringem Abstand von der Ausgangslinie und von jeweiligen Enden der vcn der Ausgangslinie geschnittenen Zuschnitteile virtuelle Stoplinien gelegt. Als Enden im Sinne des erfindungsgemäßen Verfahrens werden die Stellen der jeweiligen Zuschnitteile bezeichnet, die die maximale Erstreckung dieser Zuschnitteile in X-Richtung definieren. Außerdem werden als Anfänge von Zuschnitteilen alle die Stellen der Zuschnitteile bezeichnet, welche entgegengesetzt zur Legerichtung die maximale Erstreckung der Zuschnitteile definieren.

Diese virtuellen Stoplinien erstrecken sich ebenfalls wie die Ausgangslinie im wesentlichen senkrecht zur Legerichtung quer über die gesamte Breite der Stoffbahn. Nach dem erfindungsgemäßen Verfahren werden nun im Schritt E sämtliche von jeder virtuellen Stoplinie geschnittenen fehlerfreien Zuschnitteile bestimmt. Anschließend werden in Schritt F ebenfalls ausgehend von jeder virtuellen Stoplinie die Anfänge der von dieser geschnittenen fehlerfreien Teile sowie die Anfänge aller fehlerbehafteten Teile (durch den gerade betrachteten Fehler bzw. die als einen Fehler behandelte Fehlergruppe) bestimmt, wobei die fehlerbehafteten Teile selbstverständlich nicht von der virtuellen Stoplinie geschnitten sein müssen, sondern durch die bereits in den Schritten A und B ermittelte Lage des Fehlers absolut und unabhängig von der Lage der virtuellen Stoplinien festliegen.

Im Anschluß daran werden gemäß dem Schritt G von jeder virtuellen Stoplinie der am weitesten entgegengesetzt zur Legerichtung von dieser entfernt liegende Anfang bestimmt, der sowohl ein Anfang eines geschnittenen fehlerfreien Zuschnitteils als auch ein Anfang eines fehlerbehafteten Zuschnitteils sein kann. Nach Bestimmung dieses am weitesten von der virtuellen Stoplinie entfernt liegenden Anfangs wird außerdem auch noch die diesem Anfang entsprechende maximale Distanz von der Stoplinie ermittelt.

Wurde bei dem vorhergehenden Verfahrensschritt B festgestellt, daß das Fehlerende im Abfall liegt und somit die Ausgangslinie gemäß dem Verfahrensschritt C 1 festgelegt ist, so erfolgt, ausgehend von Schritt G, ein Übergang auf Schritt H. Bei diesem werden alle virtuellen Stoplinien ermittelt, welche in Legerichtung vor dem Fehlerende liegen und es wird festgestellt, wie groß eine Erstreckung des Fehlers in Legerichtung, ausgehend vcn der jeweiligen vor dem Fehlerende liegenden virtuellen Stoplinie ist. Die so ermittelte Erstreckung ergibt einen Zuschlag.

Gemäß dem Schritt I erhält der Zuschlag eine Korrektur dadurch, daß zu der jeweiligen maximalen Distanz der jeweiligen virtuellen Stop-Linie deren Abstand von dem am weitesten von der virtuellen Stoplinie entfernt liegenden Anfang eines fehlerbehafteten Teils ermittelt wird. Diese Differenz wird von dem Zuschlag noch subtrahiert und daraus ergibt sich ein korrigierter Zuschlagswert. Dieser korrigierte Zuschlagswert wird gemäß Schritt K dann, wenn er positiv ist, zu der maximalen Distanz der jeweiligen virtuellen, vor einem Fehlerende liegenden Stoplinie addiert.

Der Schritt L erfolgt entweder nach Schritt K oder nach Schritt G dann, wenn im vorhergehenden Verfahren gemäß Schritt B festgestellt wurde, daß das Fehlerende in einem Zuschnitteil liegt und die Ausgangslinie gemäß Schritt C 2 angeordnet wurde. Schritt L stellt die eigentliche Anwendung des erfindungsgemäßen Optimierungskriteriums dar. Gemäß diesem wird, ausgehend von sämtlichen nun in den vorangehenden Verfahren zu den jeweiligen virtuellen Stoplinien ermittelten ggf.korrigierten maximalen Distanzen die kleinste maximale Distanz ermittelt. Die zu dieser kleinsten maximalen Distanz gehörende virtuelle Stoplinie wird ausgewählt und es wird die tatsächliche Stoplinie deckungsgleich mit dieser ausgewählten virtuellen Stoplinie angeordnet.

Im letzten Schritt M des erfindungsgemäßen Verfahrens wird, ausgehend von dieser Stoplinie, deren maximale Distanz ebenfalls bekannt ist, eine Neuanlegelinie in zur Legerichtung entgegengesetzter Richtung in einem Abstand angeordnet, welcher mindestens gleich der maximalen Distanz zu dieser Stoplinie ist. An dieser Neuanlegelinie wird wieder die Materialbahn neu angelegt, und dann kann in Legerichtung in üblicher Art und Weise weiter ausgelegt werden.

Bei dem erfindungsgemäßen Verfahren wird bevorzugterweise an der Stoplinie die Stoffbahn abgeschnitten, so daß mit der Schnittkante an der Neuanlegelinie neu angelegt werden kann.

Im folgenden wird nun an Hand von drei verschiedenen Fehlersituationen die Vorgehensweise gemäß dem in dem Flußdiagramm in Fig. 1 schematisch dargestellten erfindungsgemäßen Verfahren weiter verdeutlicht.

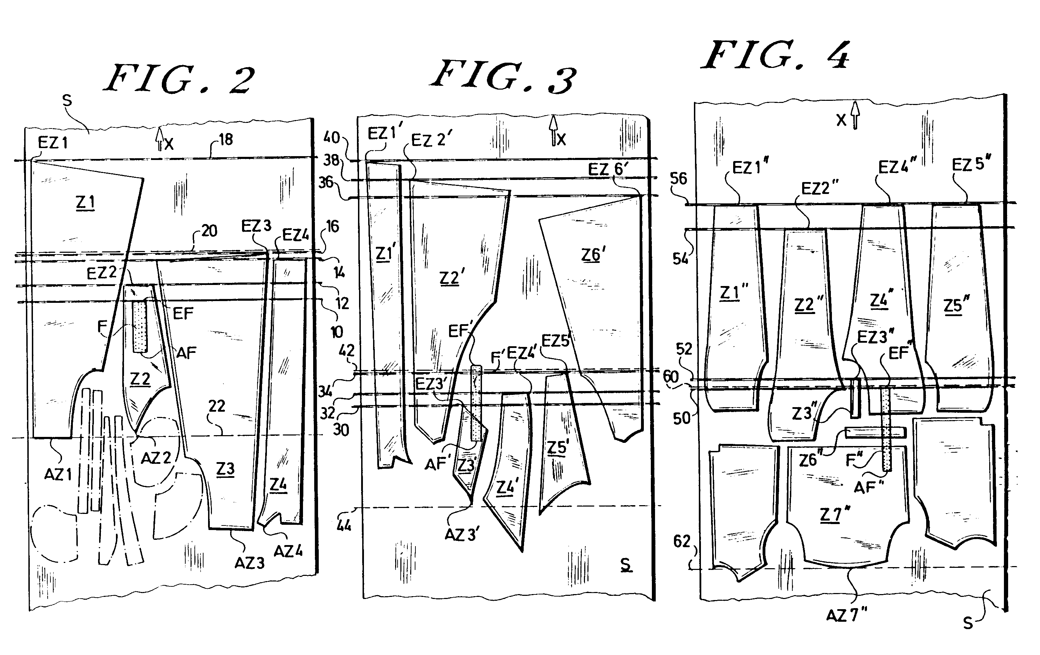

Fig. 2 zeigt einen Ausschnitt aus einem typischen Schnittmusterbild mit den Zuschnitteilen Z 1 bis Z 4. Gemäß diesem Schnittmusterbild können später nach dem Auslegen eines Lagenpakets ganze Stapel von Zuschnitteilen Z 1 bis Z 4 ausgeschnitten werden.

Stellt beim Auslegen einer Stoffbahn S in Legerichtung, allgemein als X-Richtung bezeichnet, eine Bedienungsperson oder eine Legevorrichtung nach Durchführung der Verfahrensschritte A und B fest, daß ein Fehler F sowohl mit einem Anfang AF als auch mit einem Ende EF in dem Zuschnitteil Z 2 zu liegen kommt, so wird gemäß Verfahrensschritt C 2 eine Ausgangslinie 10 am Fehlerende EF quer über die gesamte Stoffbahn S gelegt.

Dann wird gemäß Schritt D festgestellt, welche Zuschnitteile von dieser Ausgangslinie 10 geschnitten werden. Dies sind die fehlerfreien Zuschnitteile Z 1, Z 3 und Z 4 sowie das fehlerbehaftete Zuschnitteil Z 2. Anschließend werden alle Enden EZ 1 bis EZ 4 dieser Zuschnitteile Z 1, Z 2, Z 3 und Z 4 bestimmt. Bei der beschriebenen bevorzugten Ausführungsform des erfindungsgemäßen Verfahrens werden die virtuellen Stoplinien so gelegt, daß jeweils die erste virtuelle Stoplinie mit der Ausgangslinie zusammenfällt. Aus diesem Grund werden nun in das Schnittmusterbild folgende virtuelle Stoplinien gelegt. Die erste virtuelle Stoplinie fällt mit der Ausgangslinie 10 zusammen. Die zweite virtuelle Stoplinie 12 liegt in Legerichtung in geringem Abstand vom Ende EZ 2 des fehlerbehafteten Teils Z 2. die dritte virtuelle Stoplinie 14 liegt in geringem Abstand vom Ende des Zuschnitteils Z 4. Die vierte virtuelle Stoplinie 16 liegt in geringem Abstand in Legerichtung vom Ende EZ 3 des Zuschnitteils Z 3 entfernt und die fünfte virtuelle Stoplinie 18 liegt in geringem Abstand vom Ende EZ 1 des Zuschnitteils Z 1 entfernt.

Gemäß Schritt E sind dann sämtliche, von den virtuellen Stoplinien 10 bis 18 geschnittenen fehlerfreien Teile zu ermitteln. Das sind im Fall der virtuellen Stoplinie 10 und der virtuellen Stoplinie 12 jeweils die Zuschnittteile Z 1, Z 3 und Z 4, im Falle der dritten virtuellen Stoplinie 14 die Zuschnitteile Z 3 und Z 1, im Falle der vierten virtuellen Stoplinie 16 lediglich noch das Zuschnitteil Z 1 und im Falle der fünften virtuellen Stoplinie 18 kein Zuschnitteil mehr.

Im Anschluß daran sind gemäß Schritt F sämtliche Anfänge der von jeder virtuellen Stoplinie geschnittenen fehlerfreien Teile und sämtliche Anfänge aller fehlerbehafteten Teile zu ermitteln. Dies sind beispielsweise im Falle der ersten virtuellen Stoplinie 10 die Anfänge AZ 1 des ersten Zuschnitteils, AZ 2 des fehlerbehafteten Zuschnitteils, AZ 3 des Zuschnitteils Z 3 und AZ 4 des Zuschnitteils Z 4. Bei jeder virtuellen Stoplinie 10 bis 18 ist nun der Anfang auszuwählen, welcher eine maximale Distanz von dieser bestimmten virtuellen Stoplinie 10 bis 18 aufweist. Im Falle der virtuellen Stoplinie 10 ist das der Anfang AZ 3 genauso wie im Falle der virtuellen Stoplinie 12, im Falle der virtuellen Stoplinie 14 ist dies ebenfalls der Anfang AZ 3, im Falle der virtuellen Stoplinie 16 ist dies der Anfang AZ 1 und im Falle der virtuellen Stcplinie 18 der Anfang AZ 2.

Da es sich beim Schnittmusterbild gemäß Fig. 2 um einen Fall handelt, bei welchem das Fehlerende innerhalb eines Zuschnitteils liegt und somit nach Schritt B gemäß Schritt C2 verfahren wurde, ist der nächste Schritt der Schritt L. Das heißt also, daß alle maximalen Distanzen aller virtuellen Stoplinien 10 bis 18 miteinander verglichen werden und die jeweils kleinste maximale Distanz ermittelt wird. Dies ist die zu der virtuellen Stoplinie 16 gehörende maximale Distanz, d.h. der Abstand zwischen der virtuellen Stoplinie 16 und dem Anfang AZ 1 des Zuschnitteils Z 1. Somit ist eine tatsächliche Stoplinie 20 am Ort der virtuellen Stoplinie 16 anzuordnen und eine Neuanlegelinie 22 entgegengesetzt zur Legerichtung in einem Abstand anzuordnen, welcher mindestens der maximalen Distanz zwischen der virtuellen Stoplinie 16 und dem Anfang AZ 1 des Zuschnitteils Z 1 entspricht.

Gemäß Verfahrensschritt M wird nun an der Stoplinie 20 die Stoffbahn S über ihre ganze Breite durchgeschnitten und an der Neuanlegelinie 22 mit der Schnittkante neu angelegt und in üblicher Weise anschließend weitergelegt.

Bei einer zweiten Fehlersituation, dargestellt in Fig. 3 , liegt der Fehler F' so, daß dessen Fehleranfang AF' zwar in dem Zuschnitteil Z 3' liegt, jedoch das Fehlerende EF' außerhalb des Zuschnitteils Z 3' in dem Abfall.

Aus diesem Grund wird nach Durchführen der Verfahrensschritte A und B auf Verfahrensschritt C 1 übergegangen, d.h. die Ausgangslinie 30 wird an das nächstliegende Ende eines fehlerbehafteten Zuschnitteils, d.h. also in diesem Fall an das Ende EZ 3' des fehlerbehafteten Zuschnitteils Z 3' gelegt.

Ausgehend von dieser liegt bei dem beschriebenen Ausführungsbeispiel des erfindungsgemäßen Verfahrens auch die erste virtuelle Stoplinie am Ort der Ausgangslinie 30, die zweite virtuelle Stoplinie 32 am Ende EZ 4', die dritte virtuelle Stoplinie 34 am Ende EZ 5', die vierte virtuelle Stoplinie 36 am Ende EZ 6', die fünfte virtuelle Stoplinie 38 am Ende EZ 2' und die sechste virtuelle Stoplinie 40 am Ende EZ 1'.

Zu diesen virtuellen Stoplinien 30 bis 40 wird nun die jeweilige maximale Distanz bestimmt. Da es sich jedoch um einen Fall handelt, bei welchem das Fehlerende EF' im Abfall liegt, ist nach Schritt G gemäß den Schritten H bis K weiterzuverfahren. Aus diesem Grund wird zu den maximalen Distanzen, die zu den vor dem Fehlerende EF' liegenden Stoplinien 30 bis 34 errechnet werden, einmal die Erstreckung des Fehlers F' von der jeweiligen Stoplinie 30 bis 34 bis zu dem Fehlerende EF' als Zuschlag hinzugerechnet und wiederum die Differenz der maximalen Distanz einer jeden Stoplinie 30 bis 34 von dem am weitesten entfernt liegenden Anfang eines fehlerbehafteten Teils, in diesem Fall dem Anfang AZ 3', abgezogen und lediglich dann, wenn dieser Zuschlag positiv ist, hinzuaddiert.

Das heißt also, daß im Falle der virtuellen Stoplinie 30 die gesamte Erstreckung des Fehlers von dieser Stoplinie 30 bis zum Fehlerende EF' hinzu addiert wird, im Falle der virtuellen Stoplinie 32 die Erstreckung des Fehlers von dieser bis zum Fehlerende EF' hinzu addiert wird, jedoch zusätzlich noch die Differenz zwischen dem Anfang AZ 5' und dem Anfang AZ 3' abgezogen wird und im Falle der virtuellen Stoplinie 34 die Erstreckung des Fehlers von dieser bis zum Fehlerende EF' hinzu addiert werden muß. Unter Berücksichtigung dieser Zuschläge ergibt sich die kleinste maximale Distanz für die virtuelle Stoplinie 34, zu der allerdings noch das kurze Stück der Erstrekkung des Fehlers von dieser bis zum Fehlerende EF' hinzu addiert ist. Aus diesem Grund wird die Stoplinie 42 am Ort der virtuellen Stoplinie 34 angeordnet und die Neuanlegelinie 44 wird entgegengesetzt zur Legerichtung mindestens um die maximale Distanz der Stoplinie 34 zurückgesetzt, welche sich aus dem Abstand des Anfangs AZ 3' von der virtuellen Stoplinie 34 und der Erstreckung des Fehlers bis zum Fehlerende EF' von dieser virtuellen Stoplinie 34 zusammensetzt.

Bei einer dritten Fehlersituation, dargestellt in Fig. 4, erstreckt sich der Fehler F″ von seinem Anfang AF″ bis zu seinem Ende EF″ über mehrere Zuschnitteile, nämlich über die Zuschnitteile Z 7″, Z 6″ und Z 4″.

Da das Fehlerende EF″ in dem Zuschnitteil Z 4″ liegt, wird gemäß der Schrittfolge A, B, C 2 vorgegangen, d.h. die Ausgangslinie 50 liegt am Fehlerende EF″. Des weiteren wird dann die erste virtuelle Stoplinie ebenfalls am Ort der Ausgangslinie 50 gelegt, die zweite virtuelle Stoplinie 52 am Ende EZ 3″, die dritte virtuelle Stoplinie 54 am Ende EZ 2″ und die vierte virtuelle Stoplinie 56 an den Enden EZ 1″, EZ 4″ und EZ 5″. Bei der Ermittlung der maximalen Distanz gemäß den Schritten D bis G zeigt es sich, daß es wichtig ist, nicht nur das fehlerbehaftete Zuschnitteil, in dem das Fehlerende liegt, in Betracht zu ziehen, sondern sämtliche fehlerbehafteten Zuschnitteile, das heißt also auch die Zuschnittteile Z 6″ und Z 7″.

Wie aus Fig. 4 zu ersehen ist, muß auf jeden Fall das beschädigte Teil Z 7″ neu ausgelegt werden, so daß bei der Ermittlung der maximalen Distanzen, ausgehend von allen virtuellen Stoplinien 50 bis 56, stets der Anfang AZ 7″ am weitesten entfernt liegt. Aus diesem Grund ist die kleinste maximale Distanz, der Abstand zwischen der virtuellen Stoplinie 50 und dem Anfang AZ 7″, so daß die tatsächliche Stoplinie 60 an den Ort der virtuellen Stoplinie 50 gelegt wird und die Neuanlegelinie 62 von dieser ausgehend entgegengesetzt zur Legerichtung mindestens um die maximale Distanz zurückgelegt wird, so daß die Neuanlegelinie 62 in Legerichtung gesehen vor dem Anfang AZ 7″ liegt.

Somit kann schließlich gemäß Verfahrensschritt M an der Stoplinie 60 abgeschnitten und an der Neuanlegelinie 62 neu angelegt werden.

Eine bevorzugte Ausführungsform des erfindungsgemässen Verfahrens zur Minimierung des Materialverbrauchs beim Auslegen einer mit einem oder mehreren Fehlern behafteten Materialbahn, bei welchem das Auslegen der Stoffbahn dann, wenn der Fehler in einem Zuschnitteil des Schnittmusters zu liegen kommt, unterbrochen wird und die Materialbahn an einer quer über deren Breite verlaufenden Schneidlinie abgeschnitten wird, worauf von dieser Schneidlinie entgegengesetzt zur Legerichtung vor den Anfang des am weitesten entgegengesetzt zur Legerichtung reichenden fehlerbehafteten Teiles zu einer parallelen Neuanlegelinie zurückgefahren und von dieser aus weiter gelegt wird, zeichnet sich also dadurch aus, daß in Legerichtung am Fehlerende bzw. bei mehreren zusammenliegenden Fehlern, die gleichzeitig als ein Fehler behandelt werden, am Fehlerende des in Legerichtung am weitesten reichenden Fehlers eine gedachte Schnittlinie quer durch das Schnittbild gezogen wird, und daß ferner weitere gedachte Schnittlinien gezogen werden, die durch die Enden der von der ersten gedachten Schnittlinie betroffenen nicht fehlerhaften Teile bestimmt werden und daß sämtliche von allen gedachten Schnittlinien betroffenen Teile daraufhin untersucht werden, ob die Abschneidelinie am Fehlerende oder in Legerichtung am Ende eines der nicht fehlerbehafteten, untersuchten Teile anzuordnen ist, um den minimalen Abstand zur Neuanlegelinie und damit die geringste Materialüberlappung bei gleichzeitiger Überdeckung aller fehlerbehafteten Teile mit fehlerfreiem Material zu ermitteln.

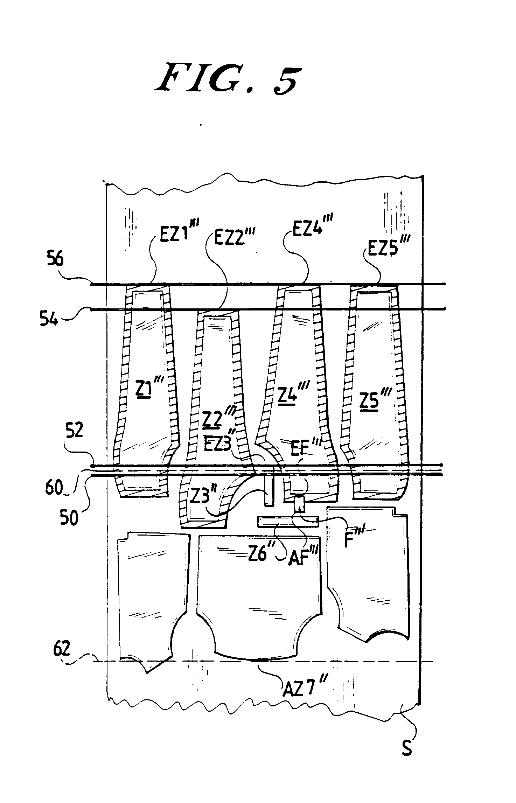

Zusätzlich zu der beschriebenen Vorgehensweise läßt sich das erfindungsgemäße Verfahren noch dadurch optimieren, daß in Ergänzung zur äußeren Form der Zuschnitteile Z1‴, Z2‴, Z4‴ und Z5‴ noch der in diesen Zuschnitteilen enthaltene Nahtzuschlag, in den Zuschnitteilen Z1‴ bis Z 5‴ der Fig. 5 schraffiert dargestellt, Berücksichtigung findet. Angenommen es handelt sich bei dem Fehler F‴ um einen Webfehler oder einen Schmutzflekken, so besteht - obwohl der Fehler F‴ zum Teil im Zuschnitteil Z4‴ zu liegen kommt - keine Notwendigkeit, das Auslegen zu unterbrechen, da ein Webfehler oder ein Schmutzflecken im Nahtzuschlag des Zuschnitteils Z4‴ bedenkenlos toleriert werden kann und sich später auch bei einem aus diesem Zuschnitteil Z4‴ gefertigten Kleidungsstück, in diesem Fall einer Hose, nicht auswirken wird.

Lediglich dann, wenn der Fehler F‴ sich über den Nahtzuschlag des Zuschnitteils Z4‴ hinaus in den in Fig. 5 nicht schraffierten Teil des Zuschnitteils Z4‴ hinaus erstrecken würde, wäre das Auslegen entsprechend dem erfindungsgemäßen Verfahren zu unterbrechen und die Durchführung der vorstehend beschriebenen Optimierungsschritte weiterzuführen.

Handelt es sich bei dem Fehler F‴ jedoch um ein Loch, so wäre dieses, obwohl es im in Fig. 5 schraffiert dargestellten Nahtzuschlag des Zuschnitteils Z4‴ liegen würde, nicht tolerierbar, da ein sich bis zu einer später durchzuführenden Naht erstreckendes Loch die Stabilität der Naht und somit auch das aus diesem Zuschnitteil Z4‴ gefertigte Kleidungsstück beeinträchtigen würde.

Im Falle eines Lochs F‴ wäre also das Auslegen zu unterbrechen und entsprechend dem erfindungsgemäßen Verfahren vorzugehen.

**Patentansprüche**

1. Verfahren zur Minimierung des Materialverbrauchs beim Auslegen einer mit einem Fehler behafteten Materialbahn, insbesondere einer Stoffbahn, bei welchem das Auslegen dann, wenn der Fehler in mindestens einem Zuschnitteil eines Schnittmusters zu liegen kommt, an einer quer zur Legerichtung über eine ganze Breite der Materialbahn verlaufenden Stoplinie unterbrochen, von dieser entgegengesetzt zur Legerichtung zu einer zur Stoplinie parallelen Neuanlegelinie zurückgefahren und von dieser aus wieder weitergelegt wird, wobei die Neuanlegelinie vor einem Anfang eines jeden der fehlerbehafteten Zuschnitteile angeordnet wird, **dadurch gekennzeichnet,** daß ausgehend von einem durch den Fehler bestimmten Bereich ein Satz vcn mindestens zwei virtuellen Stoplinien in das Schnittbild gelegt wird und alle von den virtuellen Stoplinien geschnittenen fehlerfreien Zuschnittteile ermittelt werden, daß durch Anwendung eines die von den virtuellen Stoplinien geschnittenen fehlerfreien und die fehlerbehafteten Zuschnitteile berücksichtigenden Optimierungskriteriums eine der virtuellen Stoplinien ausgewählt und an dieser die Stoplinie angeordnet wird, daß eine maximale Distanz von der Stoplinie ermittelt wird, welche dem Abstand eines am weitesten von der Stoplinie entfernt liegenden Anfangs eines der von der Stoplinie geschnittenen fehlerfreien Zuschnittteile oder eines der fehlerbehafteten Zuschnittteile entspricht, und daß die Neuanlegelinie entgegengesetzt zur Legerichtung mindestens in der maximalen Distanz von der Stoplinie angeordnet wird.

2. Verfahren nach Anspruch 1, dadurch gekennzeichnet, daß der Satz virtueller Stcplinien so positioniert wird, daß eine erste im Bereich des Fehlers und weitere in Legerichtung im Abstand von dieser liegen.

3. Verfahren nach Anspruch 2, dadurch gekennzeichnet, daß zur Positionierung der virtuellen Stoplinien im Bereich des Fehlers eine Ausgangslinie angeordnet wird, daß die von der Ausgangslinie geschnittenen fehlerfreien Zuschnitteile ermittelt werden und daß die weiteren virtuellen Stoplinien jeweils an einem Ende eines dieser Zuschnitteile angeordnet werden.

4. Verfahren nach Anspruch 3, dadurch gekennzeichnet, daß die weiteren virtuellen Stoplinien in Legerichtung in einem kleinen Abstand von den Enden der Zuschnitteile angeordnet werden.

5. Verfahren nach einem der Ansprüche 3 oder 4, dadurch gekennzeichnet, daß die erste virtuelle Stoplinie und die Ausgangslinie zusammengelegt werden.

6. Verfahren nach einem der Ansprüche 3 bis 4, dadurch gekennzeichnet, daß die erste virtuelle Stoplinie in Legerichtung gesehen auf die Ausgangslinie folgt.

7. Verfahren nach einem der Ansprüche 2 bis 6, dadurch gekennzeichnet, daß die erste virtuelle Stoplinie nach einem Auswahlkriterium entweder nahe an ein Fehlerende oder nahe an das dem Fehlerende nächstliegende Ende eines fehlerbehafteten Teils gelegt wird.

8. Verfahren nach Anspruch 7, dadurch gekennzeichnet, daß das Auswahlkriterium für das Fehlerende dann erfüllt ist, wenn dieses in einem Zuschnitteil liegt.

9. Verfahren nach einem der Ansprüche 2 bis 8, dadurch gekennzeichnet, daß die erste virtuelle Stoplinie in Legerichtung in einem kleinen Abstand von dem Fehlerende angeordnet wird.

10. Verfahren nach einem der voranstehenden Ansprüche, dadurch gekennzeichnet, daß in das Optimierungskriterium die Erstreckung der von der jeweiligen virtuellen Stoplinie geschnittenen fehlerfreien und der fehlerbehafteten Zuschnitteile entgegengesetzt zur Legerichtung eingeht.

11. Verfahren nach Anspruch 10, dadurch gekennzeichnet, daß in das Optimierungskriterium die maximalen Distanzen zwischen dem Satz virtueller Stoplinien und den zu diesen zugehörigen virtuellen Neuanlegelinien eingehen, wobei die maximalen Distanzen wie bei tatsächlichen Stoplinien ermittelt werden.

12. Verfahren nach einem der Ansprüche 10 oder 11, dadurch gekennzeichnet, daß in das Optimierungskriterium eine Ausdehnung des Fehlers zwischen einem Fehleranfang und einem Fehlerende eingeht.

13. Verfahren nach Anspruch 12, dadurch gekennzeichnet, daß eine Erstreckung des Fehlers in Legerichtung von der jeweiligen virtuellen Stoplinie bis zum Fehlerende ermittelt und zu der jeweiligen maximalen Distanz als Zuschlag addiert wird.

14. Verfahren nach Anspruch 13, dadurch gekennzeichnet, daß von dem Zuschlag die Differenz zwischen der maximalen Distanz und dem größten Abstand des Anfangs eines der fehlerbehafteten Zuschnitteile wieder abgezogen und der Zuschlag dann, wenn er größer als Null ist, zu der maximalen Distanz addiert wird.

15. Verfahren nach einem der Ansprüche 11 bis 14, dadurch gekennzeichnet, daß das Optimierungskriterium für die virtuelle Stoplinie erfüllt ist, deren zugehörige Neuanlegelinie die kleinste maximale Distanz aufweist.

16. Verfahren nach einem der voranstehenden Ansprüche, dadurch gekennzeichnet, daß die Materialbahn vor einem Anlegen an der Neuanlegelinie abgeschnitten wird.

17. Verfahren nach Anspruch 16, dadurch gekennzeichnet, daß die Materialbahn bei der Stoplinie abgeschnitten wird.

18. Verfahren nach einem der voranstehenden Ansprüche, dadurch gekennzeichnet, daß die Materialbahn zwischen der Stop- und der Neuanlegelinie entgegengesetzt zur Legerichtung in Form einer Falte gelegt wird.

19. Verfahren nach einem oder mehreren der vorstehenden Ansprüche, dadurch gekennzeichnet, daß der Abschneideund Anlegevorgang vollautomatisch erfolgen.

20. Verfahren nach einem oder mehreren der vorstehenden Ansprüche, dadurch gekennzeichnet, daß am Fehlerende (in Legerichtung) abgeschnitten wird und vor dem Zuschnitteil, welches von der Schneidlinie betroffen und am weitesten entgegengesetzt zur Legerichtung reicht, wieder angelegt wird.

21. Verfahren nach einem oder mehreren der vorstehenden Ansprüche, dadurch gekennzeichnet, daß die Schneidlinie am Ende (in Legerichtung) des fehlerbehafteten Teils angeordnet wird.

22. Verfahren nach einem oder mehreren der vorstehenden Ansprüche, dadurch gekennzeichnet, daß die Schneidlinie am Ende eines der Zuschnitteile angeordnet wird, die sich über das fehlerbehaftete Zuschnitteil in Legerichtung hinaus erstreckt.

23. Verfahren nach einem oder mehreren der vorstehenden Ansprüche, dadurch gekennzeichnet, daß die Schneidlinie in Legerichtung entweder am Ende des fehlerbehafteten Zuschnitteils oder am Ende eines der Zuschnitteile, die sich über das fehlerbehaftete Zuschnitteil in Legerichtung hinaus erstrecken, angeordnet wird.

24. Verfahren nach einem oder mehreren der vorstehenden Ansprüche, dadurch gekennzeichnet, daß Schneid- und Neuanlegelinie so angeordnet sind, daß das fehlerbehaftete Zuschnitteil überdeckt wird.

25. Verfahren nach einem oder mehreren der vorstehenden Ansprüche, dadurch gekennzeichnet, daß Schneid- und Neuanlegelinie so angeordnet sind, daß alle durch die Schneidlinie zerschnittenen Zuschnitteile einschliesslich des fehlerbehafteten Zuschnitteils überdeckt werden.

26. Verfahren nach einem oder mehreren der vorstehenden Ansprüche, dadurch gekennzeichnet, daß Schneid- und Neuanlegelinie so angeordnet sind, daß unter Beseitigung des Fehlers der kürzest mögliche Abstand zwischen Schneid- und Neuanlegelinie entsteht.

27. Verfahren nach einem oder mehreren der voranstehenden Ansprüche, dadurch gekennzeichnet, daß das Schnittbild zusätzlich zur Form der Zuschnitteile Informationen über die von Fehlern freizuhaltenden Bereiche der Zuschnitteile umfaßt und daß nur dann, wenn der Fehler in diesem Bereich der Zuschnitteile zu liegen kommt, das Auslegen unterbrochen, zur Neuanlegelinie zurückgefahren und von dieser aus weitergelegt wird.

28. Verfahren nach Anspruch 27, dadurch gekennzeichnet, daß die von Fehlern freizuhaltenden Bereiche der Zuschnitteile die bei einem aus diesen Zuschnitteilen gefertigten Kleidungsstück normalerweise sichtbaren Bereiche der Zuschnitteile sind.

29. Verfahren nach einem der Ansprüche 27 oder 28, dadurch gekennzeichnet, daß für jeden Fehler zusätzliche Daten erfaßt werden, durch welche der Fehler in zusätzliche Kategorien eingeteilt wird und daß nur dann, wenn ein Fehler einer vorbestimmten Kategorie in einen vorbestimmten Bereich eines der Zuschnitteile fällt, das Auslegen unterbrochen, zur Neuanlegelinie zurückgefahren und von dieser aus weitergelegt wird.

30. Verfahren nach Anspruch 29, dadurch gekennzeichnet, daß das Schnittbild zusätzlich zur Form der Zuschnitteile Daten über die weitere Bearbeitung eines aus den Zuschnitteilen herzustellenden Kleidungsstücks nach dem Nähen desselben umfaßt und daß aufgrund dieser Daten festgelegt ist, bei welcher Fehlerkategorie das Auslegen unterbrochen, zur Neuanlegelinie zurückgefahren und von dieser aus weitergelegt wird.

**Claims**

1. A method for minimizing the use of a material during the spreading of a flawed material web, in particular, a fabric web, wherein if the flaw falls in at least one pattern piece of a pattern, the spreading is interrupted at a stop line extending transversely to the spreading direction over an entire width of the material web, the spreading machine is driven back from the stop line in the direction contrary to the spreading direction to a restart line parallel to the stop line, and spreading is continued from the restart line, the restart line being placed before a start of each of the flawed pattern pieces, characterized in that proceeding from a region determined by the flaw, a set of at least two virtual stop lines is placed in the pattern design and all the flawless pattern pieces cut by the virtual stop lines are determined, that by applying an optimization criterion taking into consideration the flawless pattern pieces and the flawed pattern pieces cut by the virtual stop lines, one of the virtual stop lines is selected and the stop line is placed at it, that a maximum distance from the stop line is determined, said maximum distance corresponding to the furthest distance of a start of one of the flawless pattern pieces cut by the stop line or of one of the flawed pattern pieces from the stop line, and that the restart line is placed in the direction contrary to the spreading direction at least within the maximum distance from the stop line.

2. Method as defined in claim 1, characterized in that the set of virtual stop lines is positioned such that a first virtual stop line is located in the region of the flaw and further virtual stop lines at a distance therefrom in the spreading direction.

3. Method as defined in claim 2, characterized in that in order to position the virtual stop lines, a start line is placed in the region of the flaw, that the flawless pattern pieces cut by the start line are determined, and that each of the further virtual stop lines is placed at one end of one of these pattern pieces.

4. Method as defined in claim 3, characterized in that the further virtual stop lines are placed at a short distance from the ends of the pattern pieces in the spreading direction.

5. Method as defined in one of claims 3 or 4, characterized in that the first virtual stop line and the start line are made to coincide.

6. Method as defined in one of claims 3 to 4, characterized in that the first virtual stop line, seen in the spreading direction, follows the start line.

7. Method as defined in one of claims 2 to 6, characterized in that in accordance with a selection criterion the first virtual stop line is placed either near a flaw end or near that end of a flawed piece located closest to the flaw end.

8. Method as defined in claim 7, characterized in that the selection criterion for the flaw end is fulfilled when the flaw end is located in a pattern piece.

9. Method as defined in one of claims 2 to 8, characterized in that the first virtual stop line is placed at a short distance from the flaw end in the spreading direction.

10. Method as defined in one of the preceding claims, characterized in that the extent of the flawless pattern pieces and of the flawed pattern pieces cut by the respective virtual stop line in the direction contrary to the spreading direction is taken into account in the optimization criterion.

11. Method as defined in claim 10, characterized in that the maximum distances between the set of virtual stop lines and the virtual restart lines associated therewith are taken into account in the optimization criterion, said maximum distances being determined as in the case of actual stop lines.

12. Method as defined in one of claims 10 or 11, characterized in that the extent of the flaw between a flaw start and a flaw end is taken into account in the optimization criterion.

13. Method as defined in claim 12, characterized in that the extent of the flaw in the spreading direction from the respective virtual stop line to the flaw end is determined and added to the respective maximum distance as addition.

14. Method as defined in claim 13, characterized in that the difference between the maximum distance and the largest distance from the start of one of the flawed pattern pieces is subtracted again from the addition and if the addition is then greater than zero is it added to the maximum distance.

15. Method as defined in one of claims 11 to 14, characterized in that the optimization criterion is fulfilled for that virtual stop line whose associated restart line exhibits the smallest maximum distance.

16. Method as defined in one of the preceding claims, characterized in that the material web is cut off before being placed at the restart line.

17. Method as defined in claim 16, characterized in that the material web is cut off at the stop line.

18. Method as defined in one of the preceding claims, characterized in that the material web is laid in the form of a fold between the stop line and the restart line in the direction contrary to the spreading direction.

19. Method as defined in one or more of the preceding claims, characterized in that the material web is cut off and set down fully automatically.

20. Method as defined in one or more of the preceding claims, characterized in that the material web is cut off at the flaw end (in the spreading direction) and is set down again before that pattern piece affected by the cutting line and extending furthest in the direction contrary to the spreading direction.

21. Method as defined in one or more of the preceding claims, characterized in that the cutting line is placed at the end (in the spreading direction) of the flawed piece.

22. Method as defined in one or more of the preceding claims, characterized in that the cutting line is placed at the end of one of the pattern pieces extending beyond the flawed pattern piece in the spreading direction.

23. Method as defined in one or more of the preceding claims, characterized in that the cutting line is placed in the spreading direction either at the end of the flawed pattern piece or at the end of one of the pattern pieces extending beyond the flawed pattern piece in the spreading direction.

24. Method as defined in one or more of the preceding claims, characterized in that the cutting and restart lines are placed such that the flawed pattern piece is covered.

25. Method as defined in one or more of the preceding claims, characterized in that the cutting and restart lines are placed such that all the pattern pieces cut by the cutting line, including the flawed pattern piece, are covered.

26. Method as defined in one or more of the preceding claims, characterized in that the cutting and restart lines are placed such that the shortest possible distance is created between cutting and restart lines while eliminating the flaw.

27. Method as defined in one or more of the preceding claims, characterized in that in addition to the shape of the pattern pieces the pattern design contains information concerning the regions of the pattern pieces to be kept free from flaws, and that only if the flaw is located in this region of the pattern pieces is spreading interrupted, the spreading machine driven back to the restart line and spreading continued from there.

28. Method as defined in claim 27, characterized in that the regions of the pattern pieces to be kept free from flaws are those regions of the pattern pieces normally visible in an article of clothing made from these pattern pieces.

29. Method as defined in one of claims 27 or 28, characterized in that additional data is recorded for each flaw to enable said flaw to be assigned to additional categories, and that only if a flaw of a predetermined category falls within a predetermined region of one of the pattern pieces is spreading interrupted, the spreading machine driven back to the restart line and spreading continued from there.

30. Method as defined in claim 29, characterized in that in addition to the shape of the pattern pieces the pattern design contains data on the further working of an article of clothing to be made from the pattern pieces after sewing thereof, and that it is determined on the basis of this data in which flaw category spreading is interrupted, the spreading machine driven back to the restart line and spreading continued from there.

**Revendications**

1. Procédé pour optimiser l'utilisation d'un matériau lors de l'étalement d'une bande de matériau affectée d'un défaut, en particulier d'une bande de tissu, dans lequel, si le défaut vient à se trouver dans au moins une partie de coupe d'un patron de couture, on interrompt l'étalement sur une ligne d'arrêt disposée sur toute une largeur de la bande de matériau perpendiculairement à la direction de pose, on revient de celle-ci, à l'opposé du sens de pose, à une ligne de reprise d'application parallèle à la ligne d'arrêt et on continue la pose à partir de celle-ci, la ligne de reprise d'application étant disposée devant un début de chacune des parties de coupe défectueuses, **caractérisé en ce que,** en partant d'un domaine déterminé par le défaut, un jeu d'au moins deux lignes d'arrêt virtuelles est placé dans le tableau de coupe et on trouve toutes les parties de coupe sans défaut découpées à partir des lignes virtuelles, en ce que, par application d'un critère d'optimisation qui prend en considération les parties de coupe sans défaut les parties de coupe défectueuses, coupées par les lignes barrées virtuelles une des lignes d'arrêt virtuelles est choisie et la ligne d'arrêt est disposée sur celle-ci, en ce qu'une distance maximale de la ligne d'arrêt est obtenue, laquelle correspond à la distance d'un début situé le plus loin possible de la ligne d'arrêt d'une des parties de coupe sans défaut découpées par la ligne d'arrêt ou d'une des parties de coupe défectueuses, et en ce que la ligne de reprise d'application est disposée, à l'opposé du sens de pose, au moins à la distance maximale de la ligne d'arrêt.

2. Procédé selon la revendication 1, caractérisé en ce que le jeu de lignes d'arrêt virtuelles est positionné de manière telle qu'une première ligne est située dans la zone du défaut et une autre, dans le sens de pose, à distance de celle-ci.

3. Procédé selon la revendication 2, caractérisé en ce que, pour positionner les lignes d'arrêt virtuelles dans la zone du défaut, une ligne de départ est disposée, en ce qu'on trouve les parties de coupe sans défaut découpées par la ligne de départ et en ce que les autres lignes d'arrêt virtuelles sont chaque fois disposées à une fin d'une de ces parties de coupe.

4. Procédé selon la revendication 3, caractérisé en ce que les autres lignes d'arrêt virtuelles sont disposées, dans le sens de pose, à une faible distance des fins des parties de coupe.

5. Procédé suivant l'une des revendications 3 ou 4, caractérisé en ce que la première ligne d'arrêt virtuelle et la ligne de départ sont réunies.

6. Procédé suivant l'une des revendications 3 ou 4, caractérisé en ce que la première ligne d'arrêt virtuelle, en regardant dans le sens de la pose, suit la ligne de départ.

7. Procédé suivant l'une des revendications 2 à 6, caractérisé en ce que la première ligne d'arrêt virtuelle est placée, suivant un critère de choix, soit près d'une fin de défaut, soit près de la fin la plus voisine de la fin du défaut d'une partie affectée d'un défaut.

8. Procédé suivant la revendication 7, caractérisé en ce que le critère de choix de la fin du défaut est satisfait si celle-ci est située dans une partie de coupe.

9. Procédé suivant l'une des revendications 2 à 8, caractérisé en ce que la première ligne d'arrêt virtuelle est disposée, dans le sens de la pose, à une faible distance de la fin du défaut.

10. Procédé suivant l'une des revendications précédentes, caractérisé en ce que le critère d'optimisation s'étend, à l'opposé du sens de la pose, aux parties de coupe sans défaut et aux parties de coupe affectées d'un défaut découpées par les différentes lignes d'arrêt virtuelles.

11. Procédé suivant la revendication 10, caractérisé en ce que le critère d'optimisation prend en compte les distances maximales entre le jeu de lignes d'arrêt virtuelles et les lignes de reprise d'application qui correspondent à celles-ci, les distances maximales étant trouvées comme pour les lignes d'arrêt réelles.

12. Procédé suivant l'une des revendications 10 ou 11, caractérisé en ce que le critère d'optimisation prend en compte une extension du défaut entre un début de défaut et une fin de défaut.

13. Procédé suivant la revendication 12, caractérisé en ce qu'an trouve une première extension du défaut, dans le sens de la pose, de la ligne d'arrêt virtuelle correspondante à la fin du défaut et on l'ajoute en supplément à la distance maximale correspondante.

14. Procédé suivant la revendication 13, caractérisé en ce que la différence entre la distance maximale et la plus grande distance du début d'une des parties de coupe défectueuses est retranchée de nouveau et que le supplément est ajouté ensuite, s'il est supérieur à zéro, à la distance maximale.

15. Procédé suivant l'une des revendications 11 à 14, caractérisé en ce que le critère d'optimisation pour la ligne d'arrêt est satisfait si la ligne de reprise de pose correspondante de celle-ci présente la distance maximale la plus petite.

16. Procédé suivant l'une des revendications précédentes, caractérisé en ce que la bande de matériau est découpée, avant une pose, selon la ligne de reprise d'application.

17. Procédé suivant la revendication 16, caractérisé en ce que la bande de matériau est découpée le long de la ligne d'arrêt.

18. Procédé suivant l'une des revendications précédentes, caractérisé en ce que la bande de matériau est posée, sous forme de pli, entre la ligne d'arrêt et la ligne de reprise d'application dans le sens opposé au sens de la pose.

19. Procédé suivant l'une ou plusieurs des revendications précédentes, caractérisé en ce que le processus de découpe et de pose est entièrement automatique.

20. Procédé suivant l'une ou plusieurs des revendications précédentes, caractérisé en ce que la découpe s'effectue à la fin du défaut (dans le sens de la pose) et que la pose reprend avant la partie de coupe qui est touchée par la ligne de coupe et va le plus loin dans le sens opposé au sens de la pose.

21. Procédé suivant l'une ou plusieurs des revendications précédentes, caractérisé en ce que la ligne de coupe est disposée à la fin (dans le sens de la pose) de la partie défectueuse.

22. Procédé suivant l'une ou plusieurs des revendications précédentes, caractérisé en ce que la ligne de coupe est disposée à la fin d'une des parties de coupe qui s'étend au-delà de la partie de coupe défectueuse dans le sens de la pose.

23. Procédé suivant l'une ou plusieurs des revendications précédentes, caractérisé en ce que la ligne de coupe est disposée dans le sens de la pose soit à la fin de la partie de coupe défectueuse, soit à la fin d'une des parties de coupe qui s'étendent au-delà de la partie de coupe défectueuse dans le sens de la pose.

24. Procédé selon une ou plusieurs des revendications précédentes, caractérisé en ce que les lignes de coupe et de reprise d'application sont disposées de manière que la partie de coupe défectueuse soit recouverte.

25. Procédé selon l'une ou plusieurs des revendications précédentes, caractérisé en ce que les lignes de coupe et de reprise d'application sont disposées de manière que toutes les parties de coupe découpées par la ligne de coupe, y compris de la partie de coupe défectueuse, soient recouvertes.

26. Procédé suivant l'une ou plusieurs des revendications précédentes, caractérisé en ce que les lignes de coupe et de reprise d'application sont disposées de manière qu'en éliminant le défaut, on obtienne la distance la plus faible possible entre les lignes de coupe et de reprise d'application.

27. Procédé suivant l'une ou plusieurs des revendications précédentes, caractérisé en ce que le tableau de coupe comporte, en plus de la forme des parties de coupe, des informations sur les zones des parties de coupe à tenir exemptes de défauts, et en ce qu'on interrompt l'étalement, revient à la ligne de reprise d'application et reprend la pose à partir de celle-ci seulement si le défaut vient à se trouver dans cette zone des parties de coupe.

28. Procédé suivant la revendication 27, caractérisé en ce que les zones de parties de coupe à tenir exemptes de défauts sont celles qui, dans un vêtement fabriqué à partir de ces parties de coupe sont normalement des zones visibles des parties de coupe.

29. Procédé suivant l'une des revendications 27 ou 28, caractérisé en ce que, pour chaque défaut, on obtient des données supplémentaires, grâce auquel le défaut est divisé en catégories supplémentaires et en ce qu'on n'interrompt l'étalement, on ne revient à la ligne de reprise d'application et on ne reprend la pose que si un défaut d'une catégorie prédéterminée tombe dans une zone prédéterminée d'une des parties de coupe .

30. Procédé suivant la revendication 29, caractérisé en ce que le tableau de coupe, en plus de la forme des parties de coupe, comporte des données sur le traitement ultérieur d'une partie de vêtement à fabriquer a partir des parties de coupe après la couture de celui-ci et en ce que, à partir de ces données, on détermine pour quelle catégorie d'erreurs l'étalement est interrompu, on revient à la ligne de reprise d'application et on reprend la pose à partir de celle-ci.

# *FIG. 1*

FIG. 4

FIG. 3

FIG. 2

# FIG. 5